# FASCICULE DE BREVET EUROPEEN

(11) **EP 3 100 582 B1**
(45) Date de publication et mention de la délivrance du brevet: **18.10.2017**
(21) Numéro de dépôt: 14828178.5
(22) Date de dépôt: 12.12.2014
(51) Int. Cl.: H04W 8/00, H04W 52/02, H04M 1/73, H04W 40/22, H04W 40/10, H04W 76/02, H04W 76/04, H04W 88/02, H04W 88/04, H04W 88/08

(54) **PROCÉDÉ DE COMMUNICATION ENTRE UN TERMINAL ALIMENTÉ PAR BATTERIE ET UNE STATION DE BASE ET RÉSEAU DE COMMUNICATION ASSOCIÉ**
VERFAHREN ZUR KOMMUNIKATION ZWISCHEN EINER BATTERIEBETRIEBENEN ENDVORRICHTUNG UND EINER BASISSTATION UND ZUGEHÖRIGES KOMMUNIKATIONSNETZ
METHOD OF COMMUNICATION BETWEEN A BATTERY POWERED TERMINAL AND A BASE STATION AND ASSOCIATED COMMUNICATION NETWORK

(30) Priorité: 29.01.2014 FR 1400233
(43) Date de publication de la demande: 07.12.2016
(73) Titulaire: Airbus DS SAS, 78990 Elancourt (FR)
(72) Inventeur: GRUET, Christophe, F-78180 Montigny le Bretonneux (FR); GEORGEAUX, Eric, F-78180 Montigny le Bretonneux (FR); GROMAT, Hervé, F-78390 Bois d'Arcy (FR); PONS MASBERNAT, Xavier, F-78180 Montigny le Bretonneux (FR)
(74) Mandataire: Cabinet Camus Lebkiri
(86) Numéro de dépôt international: PCT/FR2014/000275
(87) Numéro de publication internationale: WO 2015/114224

(56) Documents cités:
- WO-A1-2012/170794
- US-A1- 2010 167 743
- US-A1- 2013 188 552

## Description

### 1. Domaine technique de l'invention

L'invention concerne un procédé de communication entre un terminal utilisateur alimenté par une batterie, en particulier un terminal mobile, et une station de base, et un réseau de communication associé. L'invention trouve des applications particulièrement avantageuses pour les systèmes mobiles numériques privés de radiocommunication professionnelle, dit PMR (pour *Private Mobile Radio* ou *Professional Mobile Radio,* en anglais). L'objet de l'invention trouve un intérêt supplémentaire pour les terminaux sans fils, dit mobiles, destinés aux très hauts débits, telles que les technologies larges bandes, basées sur du LTE (pour *Long Term Evolution*), ou de la 4G (pour 4ème Génération de réseau cellulaire).

### 2. Arrière-plan technologique

Dans le domaine des systèmes numériques privés de radiocommunication mobile, appelé par la suite système PMR, il existe un besoin de faire évoluer des réseaux PMR basés sur des technologies bas débit (ou *Narrowband,* en anglais), et issus d'une génération dépassée (ou *legacy,* en anglais), en des réseaux PMR basés sur des technologies haut débit (ou Broadband, en anglais), voire du très haut débit. Par réseau PMR basé sur du bas débit, on entend un réseau de technologie TETRA, ou TETRAPOL, ou P25. Par réseau PMR basé sur du haut débit, on entend un réseau de technologie IP-WAN. Par réseaux IP-WAN, on entend des réseaux se basant sur les technologies WIFI (*Wireless Fidelity,* en anglais), et/ou WIMAX (*Worldwide Interoperability for Microwave Access,* en anglais), et/ou 2G (2^{ème} Génération de réseau cellulaire), et/ou 3G (3^{ème} Génération de réseau cellulaire), et/ou LTE (*Long Term Evolution*), 4G (4^{ème} Génération) et/ou de futures technologies.

Cette évolution a pour but de permettre l'intégration de nouveaux services basés sur IP (ou *Internet Protocol,* en anglais), mais également de continuer à supporter les services de réseaux PMR issus de générations précédentes, tels que la radio, ainsi que l'ensemble des interfaces.

Toutefois, dans le cadre de l'évolution de tel réseau PMR sur du très haut débit mobile, tel que de la LTE, ou de la 4G, le problème le plus critique rencontré, est la faible durée de vie des batteries alimentant les terminaux utilisant les technologies précédemment citées.

Il existe donc un besoin de déterminer une technique ou un ensemble de techniques permettant de sauvegarder l'énergie issue de chaque batterie de terminal. D'autres exemples de l'état de l'art sont illustrés dans les documents US2010/167743, US2013/188552 et WO2012/170794.

### 3. Objectifs de l'invention

L'invention vise à pallier au moins certains des inconvénients des procédés de communication entre un terminal utilisateur et une station de base connus.

En particulier, l'invention vise à fournir, dans au moins un mode de réalisation de l'invention, un procédé de communication permettant d'optimiser l'énergie utilisée par un terminal utilisateur.

### 4. Exposé de l'invention

Pour ce faire, l'invention concerne un procédé de communication entre un terminal utilisateur alimenté par une batterie et une station de base permettant une optimisation de la gestion de la batterie dudit terminal utilisateur, caractérisé en ce qu'il comprend :
- une étape de sélection parmi des terminaux, dits terminaux environnants, alimentés par batterie et situés dans une zone à portée de la station de base, de terminaux dont la distance avec ledit terminal utilisateur est inférieure à une distance prédéterminée et dont le niveau de batterie est supérieur à un seuil prédéterminé, dits terminaux voisins,
- une étape de configuration des terminaux voisins et du terminal utilisateur par le biais d'une consigne de configuration,
- une étape de transmission de données entre le terminal utilisateur et la station de base suivant ladite consigne de configuration définissant au moins un terminal voisin par lequel lesdites données transitent,
- ladite consigne de configuration définit un protocole de communication de courte portée et un protocole de communication de longue portée,
et en ce que l'étape de transmission de données comprend :
- une sous-étape de transmission des données entre le terminal utilisateur et un ou plusieurs terminaux voisins par le protocole de communication de courte portée,
- une sous-étape de transmission des données entre le ou les terminaux voisins et la station de base par le protocole de communication de longue portée.

Un procédé de communication selon l'invention permet donc d'économiser la batterie d'un terminal utilisateur en effectuant une transmission de données par le biais d'autres terminaux situés à proximité du terminal utilisateur, c'est-à-dire à une distance de celui-ci inférieure à une distance prédéterminée. Outre cette notion de distance, les terminaux voisins sont sélectionnés en fonction de leur niveau de batterie, qui doit se trouver au-delà d'un certain seuil. Selon différentes variantes, ce seuil est fixe, par exemple 30% de la capacité totale de la batterie, ou bien variable, par exemple le niveau de batterie du terminal utilisateur définit un seuil, de façon à ce que les terminaux par lesquels se fait la transmission possèdent tous un niveau de batterie supérieur au niveau de batterie du terminal utilisateur. Le résultat est donc notamment un partage virtuel des batteries par l'utilisation d'un ou plusieurs terminaux voisins pour servir de relais à la transmission vers la station de base. Cela permet donc de réduire la consommation d'énergie du terminal utilisateur, du fait de la transmission des données sur une distance plus réduite, et en utilisant l'énergie des terminaux voisins qui ont un niveau de batterie suffisamment élevé pour assurer cette transmission des données du terminal utilisateur vers la station de base. Le procédé permet aussi de profiter des batteries de terminaux situés à proximité qui sont dans un état de veille (*Idle* en anglais), c'est-à-dire qui ne sont connectés à aucun réseau, mais qui se trouvent tout de même dans la zone de portée. Ces terminaux en état de veille reçoivent la consigne de configuration et passent en mode connecté si ladite consigne de configuration l'exige.

D'un point de vue plus général, le procédé permet une gestion beaucoup plus efficace du niveau de la batterie du terminal utilisateur, afin que ladite batterie ne soit pas épuisée trop rapidement, lors d'une intervention d'un groupe d'utilisateurs (notamment police, gendarmerie, unité spéciale, pompier, ou tout autre unité d'intervention habilitée à utiliser un tel terminal mobile) sur une zone géographique, par exemple, et qu'elle vienne à manquer d'énergie durant ladite intervention ou lors des prochaines utilisations dudit terminal utilisateur. Dans le cadre de ladite intervention, le procédé peut aussi permettre l'optimisation de la gestion de l'énergie d'un terminal particulier prioritaire, essentiel ou sensible, comme par exemple celui d'un chef d'équipe ou d'unité d'intervention. Par exemple, dans ce cas, des données transmises par le terminal prioritaire transitent systématiquement par un terminal voisin, quel que soit le niveau de batterie du terminal voisin pour sauvegarder le niveau de batterie du terminal prioritaire.

Avantageusement, le protocole de communication de courte portée permet au terminal utilisateur de transmettre les données en consommant moins d'énergie qu'en utilisant un protocole de communication de longue portée pour transmettre les données directement à la station de base. Ici, chaque terminal voisin utilise un protocole de communication de longue portée, et donc utilise une partie de leur énergie pour transmettre les données provenant du terminal utilisateur. Avantageusement et selon l'invention, ladite consigne de configuration définit au moins un protocole de communication à utiliser pour l'étape de transmission de données.

Selon cet aspect de l'invention, la consigne de configuration définit le protocole de communication le plus adapté à la transmission de données, en fonction par exemple de la distance entre les terminaux, de leur nombre, et de leurs niveaux de batterie.

Avantageusement et selon l'invention, ladite étape de sélection des terminaux voisins comprend :
- une étape de signalement effectuée par le terminal utilisateur en direction des terminaux environnants,
- une étape de calcul de la distance entre chaque terminal environnant et le terminal utilisateur,
et l'étape de configuration comprend :
- une étape d'émission d'un rapport effectuée par chaque terminal voisin en direction de la station de base, ledit rapport comprenant au moins le niveau de batterie du terminal voisin et sa position,
- une étape de détermination de ladite consigne de configuration par la station de base,
- une étape d'émission de ladite consigne de configuration par la station de base en direction des terminaux voisins et du terminal utilisateur.

Selon cet aspect de l'invention, la détermination de la consigne de configuration se fait par un envoi d'un rapport à la station de base par chaque terminal voisin, puis par une élaboration de la configuration optimale en fonction des données extraites de ces différents rapports, puis par une émission de la consigne aux terminaux concernés.

Avantageusement et selon une variante de l'invention :
- l'étape de signalement du terminal utilisateur aux terminaux environnants comprend une sous-étape d'envoi d'un signal d'aide par le terminal utilisateur en direction de la station de base, puis une sous-étape d'envoi d'un signal de contrôle de ressource par la station de base via une diffusion dudit signal dans la zone à portée de la station de base,
- l'étape d'émission de ladite consigne de configuration par la station de base s'effectue uniquement en direction des terminaux voisins et du terminal utilisateur.

On entend par diffusion du signal une transmission du signal par la station de base dans toute la zone à portée de la station de base, sans adressage vers des terminaux particuliers mais qui est reçu par les terminaux environnants se trouvant dans cette zone. Ce type de transmission est plus connu sous le nom anglais de *broadcasting.*

Selon cette variante de l'invention, la station de base se charge de transmettre un signal aux terminaux environnants à la suite de la réception du signal d'aide envoyé par le terminal utilisateur. Cela permet de s'assurer que la majorité des terminaux proches du terminal utilisateur et susceptibles d'être sélectionnés comme terminaux voisins reçoivent le signal d'aide.

De préférence, le signal d'aide comprend au moins les informations suivantes :
- un identifiant du terminal utilisateur,
- la position du terminal utilisateur (déterminée par exemple par les systèmes de géolocalisation GPS ou A-GPS, par détection des réseaux voisins, etc.),
- une liste de possibilités de communication du terminal utilisateur, notamment une liste du type de réseau auquel ledit terminal utilisateur peut se connecter au vu de son niveau de batterie (par exemple LTE, WiFi, Bluetooth, etc.),
- ladite distance prédéterminée pour la détermination des terminaux voisins,
- le niveau de batterie dudit terminal utilisateur.

De préférence, le signal de contrôle de ressource comprend au moins les mêmes informations que le signal d'aide.

Avantageusement et selon une variante de l'invention :
- l'étape de signalement par le terminal utilisateur en direction des terminaux environnants comprend une étape d'envoi par le terminal utilisateur d'un signal de sondage de portée faible définie en fonction de ladite distance prédéterminée,
- l'étape d'émission de la consigne de configuration par la station de base s'effectue via une diffusion de ladite consigne dans la zone à portée de la station de base.

Selon cette variante de l'invention, le signalement est effectué par un signal de portée faible, notamment adapté pour être reçu par les terminaux proches du terminal utilisateur, qui sont susceptibles d'être sélectionnés en tant que terminaux voisins. Cela permet de s'affranchir d'un envoi de signal à la station de base. Une fois la consigne de configuration établie, elle est transmise par diffusion (ou *broadcasting* en anglais), de façon à être reçue par les terminaux environnants, et notamment par les terminaux voisins et le terminal utilisateur qui sont concernés par cette consigne de configuration.

Avantageusement et selon une variante de l'invention, l'étape de sélection des terminaux voisins comprend une étape d'envoi par le terminal utilisateur d'un signal de requête de portée faible définie en fonction de ladite distance prédéterminée, ledit signal de requête comprenant ladite consigne de configuration définissant des informations relatives à un réseau de courte portée auquel les terminaux voisins doivent se connecter pour la transmission des données avec le terminal utilisateur.

Selon cet aspect de l'invention, les terminaux s'affranchissent de la station de base pour la configuration, la consigne étant directement délivrée par le terminal utilisateur vers les terminaux situés à courte portée.

Avantageusement et selon une variante de l'invention :
- l'étape de sélection des terminaux voisins comprend une sous-étape d'envoi par le terminal utilisateur d'un signal de connexion comprenant ladite consigne de configuration définissant des informations relatives à un réseau de courte portée auquel les terminaux voisins doivent se connecter pour la transmission des données avec le terminal utilisateur, en direction de la station de base, une sous-étape de diffusion dudit signal de connexion dans la zone à portée de la station de base, et une sous-étape de calcul de la distance entre chaque terminal environnant et le terminal utilisateur,
- l'étape de configuration comprend une étape de connexion des terminaux voisins audit réseau de courte portée.

Selon cet aspect de l'invention, la station de base permet la diffusion du signal de connexion dans la zone de portée, mais on évite les communications entre les terminaux environnants et la station de base en transmettant directement les informations relatives à un réseau auquel les terminaux voisins doivent se connecter.

De préférence, le signal de connexion comprend au moins les informations suivantes en plus des informations relatives au réseau auquel les terminaux voisins doivent se connecter :
- un identifiant du terminal utilisateur,
- une position du terminal utilisateur (déterminée par exemple par les systèmes de géolocalisation GPS ou A-GPS, par détection des réseaux voisins, etc.),
- ladite distance prédéterminée pour la détermination des terminaux voisins,
- le niveau de batterie dudit terminal utilisateur.

Avantageusement et selon une variante de l'invention, ladite consigne de configuration configure les terminaux de sorte que, lors de l'étape de transmission de données, lesdites données transitent par un unique terminal voisin à la fois.

Selon cet aspect de l'invention, l'étape de transmission de données peut utiliser la plupart des protocoles de communication qui permettent la transmission de données entre deux terminaux, sans nécessiter d'utiliser un protocole implémentant les connexions multiples. Cela permet donc d'utiliser le protocole de communication le mieux adapté à la situation courante et aux effets souhaités, par exemple le protocole le plus économe en énergie.

Avantageusement et selon ce dernier aspect de l'invention, ladite consigne de configuration configure les terminaux de sorte que, lors de l'étape de transmission de données, les données transitent alternativement par chaque terminal voisin pendant un intervalle de temps corrélé avec le niveau de batterie de chaque terminal voisin.

Selon cet aspect de l'invention, on répartit la transmission de données entre les différents terminaux voisins en fonction de leur niveau de batterie, de façon à transmettre plus longtemps par le biais d'un terminal voisin possédant un niveau de batterie élevé et moins longtemps par le biais d'un terminal voisin possédant un niveau de batterie moins élevé (mais tout de même au dessus du seuil prédéterminé défini précédemment).

Avantageusement et selon une variante de l'invention, ladite consigne de configuration configure les terminaux de sorte que, lors de l'étape de transmission de données, lesdites données transitent simultanément par plusieurs terminaux voisins et directement entre le terminal utilisateur et la station de base en utilisant un protocole de communication multi-chemin.

Selon cet aspect de l'invention, un protocole de communication multi-chemin consiste à envoyer les données simultanément par plusieurs chemins, ici par plusieurs terminaux voisins, afin d'améliorer la transmission, par exemple en termes de débit de données, de répartition de charge des terminaux, de qualité de transmission (due aux redondances possibles et donc de correction d'erreur).

L'invention concerne également un réseau de communication, comprenant une station de base et un ensemble de terminaux alimentés par batterie et situés à portée de la station de base caractérisé en ce qu'au moins un des terminaux met en oeuvre le procédé selon l'invention.

Les terminaux du réseau de communication peuvent mettre en oeuvre le procédé pour des raisons diverses, comme par exemple un niveau de batterie faible (en dessous d'un seuil prédéterminé), ou du fait que le terminal soit un terminal prioritaire, essentiel ou sensible parmi l'ensemble de terminaux, tel que le terminal d'un chef d'équipe par exemple, pour lequel il est important d'économiser l'énergie afin de le garder opérationnel le plus de temps possible.

L'invention concerne également un procédé et un réseau de communication caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- les figures 1 et 2 représentent schématiquement des sous-étapes d'une étape de signalement effectuée par un terminal utilisateur dans un procédé selon un mode de réalisation de l'invention,
- la figure 3 représente schématiquement une étape d'émission d'un rapport effectuée par des terminaux voisins dans un procédé selon un mode de réalisation de l'invention,
- la figure 4 représente schématiquement une étape d'émission d'une consigne de configuration dans un procédé selon un mode de réalisation de l'invention,
- la figure 5 représente schématiquement un diagramme de séquence d'étapes du procédé selon un mode de réalisation de l'invention,
- la figure 6 représente schématiquement une étape de signalement effectuée par un terminal utilisateur dans un procédé selon un autre mode de réalisation de l'invention,
- la figure 7 représente schématiquement une étape d'émission d'un rapport effectuée par des terminaux voisins dans un procédé selon un autre mode de réalisation de l'invention,
- la figure 8 représente schématiquement une étape d'émission d'une consigne de configuration dans un procédé selon un autre mode de réalisation de l'invention,
- la figure 9 représente schématiquement un diagramme de séquence d'étapes du procédé selon un autre mode de réalisation de l'invention,
- la figure 10 représente schématiquement une étape de transmission de données dans un procédé selon un premier mode de réalisation,
- la figure 11 représente schématiquement une étape de transmission de données dans un procédé selon un deuxième mode de réalisation,
- la figure 12 représente schématiquement une étape de transmission de données dans un procédé selon un troisième mode de réalisation.

### 6. Description détaillée d'un mode de réalisation de l'invention

On note dès à présent que les figures ne sont pas à l'échelle.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Un procédé de communication selon un mode de réalisation de l'invention s'articule sur plusieurs étapes, chaque étape pouvant faire l'objet d'un ou plusieurs modes de réalisation décrits dans la suite de cette description.

Le procédé de communication permet la transmission de données entre un terminal utilisateur alimenté par une batterie et une station de base. Ce procédé a pour objectif de permettre l'optimisation de la gestion de la batterie du terminal utilisateur, grâce à une succession d'étapes, dont certaines sont préalables à une étape de transmission de données entre le terminal utilisateur et la station de base. Pour permettre l'optimisation de la gestion de la batterie du terminal utilisateur, l'étape de transmission entre le terminal utilisateur et la station de base s'effectue en suivant une consigne de configuration qui permet de définir un ou plusieurs terminaux voisins par lequel les données vont transiter. Ces terminaux voisins sont des terminaux faisant partie d'un ensemble de terminaux, dits terminaux environnants, qui se situent dans la zone de portée de la station de base, c'est-à-dire dans la zone dans laquelle un terminal peut communiquer avec la station de base. L'ensemble composé des terminaux environnants, comprenant notamment le terminal utilisateur et les terminaux voisins, et de la station de base constituent un réseau de communication amené à mettre en oeuvre le procédé selon l'invention et décrit ci-après.

Afin de déterminer quels sont les terminaux voisins parmi les terminaux environnants, le procédé comprend une étape de sélection des terminaux voisins. Cette étape de sélection se base notamment sur deux caractéristiques qui peuvent qualifier un terminal voisin : une distance avec le terminal utilisateur inférieure à une distance prédéterminée, et un niveau de batterie supérieur à un seuil prédéterminé.

En outre, le procédé comprend aussi une étape de configuration des terminaux voisins et du terminal utilisateur par le biais d'une consigne de configuration.

Ces deux étapes font l'objet de plusieurs modes de réalisation.

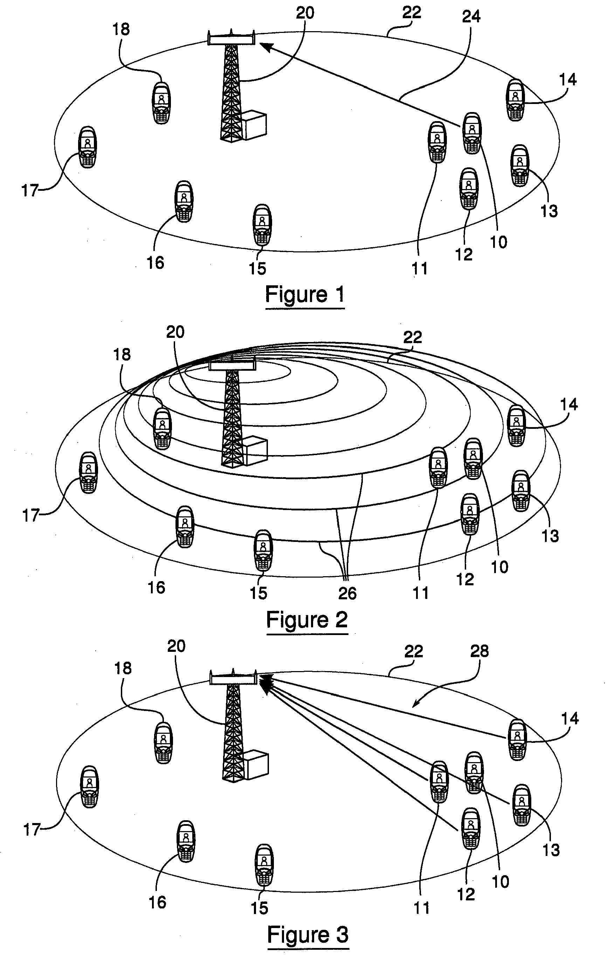

Un premier mode de réalisation de ces deux étapes est décrit ci-dessous en référence aux figures 1 à 5.

Plus particulièrement, les figures 1 et 2 représentent un mode de réalisation de l'étape de sélection des terminaux voisins. Une station de base 20 est configurée pour pouvoir effectuer des communications avec un ensemble de terminaux environnants 10, 11, 12, 13, 14, 15, 16, 17 et 18 situés dans une zone 22 à portée de la station de base 20. Parmi ces terminaux environnants se trouve un terminal utilisateur 10, qui met en oeuvre le procédé selon un mode de réalisation de l'invention. Pour effectuer l'étape de sélection des terminaux voisins, le terminal utilisateur 10 effectue une étape de signalement en direction des terminaux environnants, comprenant deux sous étapes :
- une sous-étape d'envoi d'un signal d'aide par le terminal utilisateur 10 en direction de la station de base 20. L'envoi du signal d'aide est représenté en référence à la figure 1 par une flèche 24 allant du terminal utilisateur 10 vers la station de base 20.
- une sous-étape d'envoi d'un signal de contrôle de ressource (RRC pour *Radio Resource Control* en anglais) par la station de base 20 en utilisant une diffusion plus connue sous le nom anglais de *broadcasting* qui permet d'envoyer le signal sur l'ensemble de la zone 22 à portée de la station de base 20, sans nécessiter d'adresser le signal à chaque terminal environnant présent dans la zone 22. L'envoi du signal de contrôle de ressource via diffusion est représenté en référence à la figure 2 par un ensemble d'ellipses 26 recouvrant la zone 22 à portée de la station de base 20.

Le signal de contrôle de ressource pouvant être envoyé à tout moment par la station de base 20, les terminaux environnants doivent être à tout moment capables de le réceptionner.

Tous les terminaux environnants reçoivent donc le signal de contrôle de ressource qui comprend au minimum toutes les informations comprises dans le signal d'aide envoyé par le terminal utilisateur 10. Pour ne pas diminuer de façon inutile leur niveau de batterie, les terminaux ayant un niveau de batterie faible n'effectuent aucune autre étape du procédé après réception du signal de contrôle de ressource. Un niveau de batterie faible est un niveau inférieur à un seuil prédéterminé, qui peut être soit un seuil fixe, par exemple 30% de la capacité totale de la batterie, soit un seuil dépendant du niveau de batterie du terminal utilisateur 10, par exemple de façon à ce que tous les terminaux ayant un niveau de batterie inférieur au terminal utilisateur 10 ne soient pas utilisés dans la suite du procédé, soit un seuil dépendant d'un autre paramètre.

Les terminaux environnants ayant un niveau de batterie suffisant calculent à partir des informations réceptionnées (position du terminal utilisateur 10, distance prédéterminée) s'il se trouve à une distance inférieure à la distance prédéterminée du terminal utilisateur 10. Les terminaux satisfaisant aux contraintes de niveau de batterie et de distance sont sélectionnés en tant que terminaux voisins 11, 12, 13 et 14. Un critère supplémentaire de sélection peut être aussi la vérification que le terminal voisin possède au moins une possibilité de communication en commun avec le terminal utilisateur 10, en termes de type de réseau avec lequel les terminaux vont pouvoir communiquer.

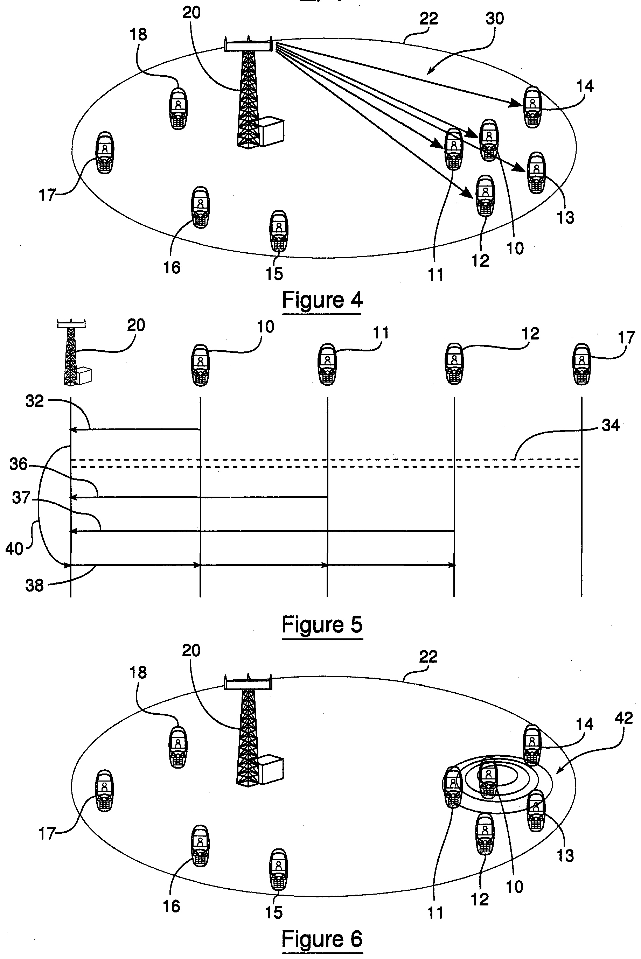

Les figures 3 et 4 représentent un mode de réalisation de l'étape de configuration.

Les terminaux voisins 11, 12, 13 et 14 sélectionnés lors de l'étape de sélection envoient chacun un rapport à la station de base 20 lors d'une étape d'émission du rapport. L'émission du rapport à la station de base 20 est représentée en référence à la figure 3 par des flèches allant des terminaux voisins 11, 12, 13 et 14 vers la station de base 20.

Le rapport comprend notamment les informations suivantes :
- l'identifiant et la position du terminal voisin,
- l'identifiant et la position du terminal utilisateur 10,
- la liste des possibilités de communication entre le terminal voisin et le terminal utilisateur 10,
- le niveau de batterie du terminal voisin.

La station de base 20 réceptionne les rapports pendant un temps limité, défini par une temporisation démarrée à l'étape d'envoi du signal de contrôle de ressource. Au terme de cette temporisation, la station de base 20 calcule la meilleure stratégie à mettre en place au vu des rapports obtenus. Cette meilleure stratégie permet la définition d'une consigne de configuration destinée aux terminaux voisins 11, 12, 13 et 14 et au terminal utilisateur 10 et définissant le ou les terminaux voisins à utiliser pour la transmission de données et le ou les protocoles de communication à utiliser.

La station de base 20 transmet cette consigne de configuration en direction des terminaux voisins 11, 12, 13 et 14 lors d'une étape d'émission de la consigne de configuration. L'émission de la consigne est représentée en référence à la figure 4 par des flèches 30 allant de la station de base 20 vers les terminaux voisins 11, 12, 13 et 14 et le terminal utilisateur 10.

La figure 5 représente un diagramme de séquence du premier mode de réalisation de l'étape de sélection des terminaux voisins et l'étape de configuration décrit dans les paragraphes précédents. La station de base 20 et les quatre terminaux 10 (le terminal utilisateur), 11, 12, et 17 parmi les terminaux environnants sont représentés et les communications entre ces terminaux sont symbolisées par des flèches ou des traits pointillés :
- la flèche 32 représente la sous-étape d'envoi du signal d'aide du terminal utilisateur 10 vers la station de base 20, décrite précédemment en référence à la figure 1,
- les traits pointillés 34 représentent la sous-étape d'envoi du signal de contrôle de ressource par diffusion dans l'ensemble de la zone 22 de portée de la station de base 20, décrite précédemment en référence à la figure 2,
- les flèches 36 et 37 représentent l'étape d'émission du rapport par chaque terminal voisin 11 et 12 en direction de la station de base 20, décrite précédemment en référence à la figure 3,
- la flèche 38 représente l'étape d'émission de la consigne de configuration par la station de base 20 vers les terminaux voisins 11 et 12 et le terminal utilisateur 10, décrite précédemment en référence à la figure 4,
- la flèche 40 représente la temporisation lancée par la station de base 20 à l'envoi du signal de contrôle de ressource et dont le terme déclenche la définition de la consigne de configuration, puis son émission.

Dans un autre mode de réalisation, le terminal utilisateur 10 envoie un signal de contrôle à la station de base 20 qui le diffuse dans la zone de portée 22, de façon analogue au mode de réalisation décrit en référence aux figures 1 et 2. Ce signal de contrôle comprend les mêmes informations que le signal d'aide décrit précédemment, en ajoutant une consigne de configuration comprenant des informations relatives à un réseau de courte portée auquel les terminaux voisins doivent se connecter pour la transmission des données avec le terminal utilisateur. Les terminaux voisins 11, 12, 13 et 14 qui reçoivent ce signal de contrôle se connectent alors directement au réseau signifié par le terminal utilisateur 10, sans effectuer l'étape d'émission de rapport par les terminaux voisins 11, 12, 13 et 14, ni l'étape d'émission de la consigne par la station de base 20 du mode de réalisation décrit précédemment en référence aux figures 3 et 4.

L'étape de sélection des terminaux voisins et l'étape de configuration font aussi l'objet d'un deuxième mode de réalisation, décrit ci-dessous en référence aux figures 6 à 9.

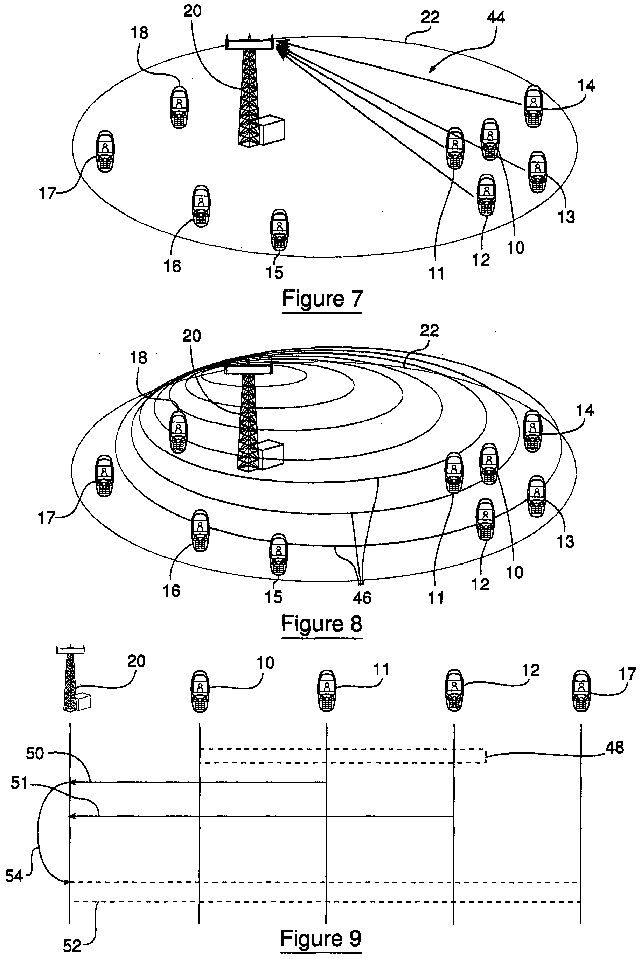

La figure 6 représente l'étape de signalement par le terminal utilisateur 10, qui s'effectue en direction des terminaux environnants et qui comprend une étape d'envoi par le terminal utilisateur 10 d'un signal de sondage 42 de portée faible définie en fonction de la distance prédéterminée. Autrement dit, cette portée faible est définie de façon à chercher à atteindre seulement les terminaux qui sont des potentiels terminaux voisins. Ce signal de sondage 42 est connu par les terminaux environnants, et entraine l'émission d'un rapport en direction de la station de base 20 par chaque terminal voisin 11, 12, 13 et 14, c'est-à-dire chaque terminal correspondant aux critères de distance et de niveau de batterie énoncés précédemment. L'émission du rapport est représentée par des flèches 44 allant des terminaux voisins en direction de la station de base 20, en référence à la figure 7. Cette émission est analogue à l'émission du rapport représentée en référence à la figure 3.

Le rapport comprend notamment les informations suivantes :
- l'identifiant et la position du terminal voisin,
- la liste des possibilités de communication entre le terminal voisin et le terminal utilisateur 10,
- le niveau de batterie du terminal voisin,
- le contenu du signal de sondage 42,
- l'heure d'envoi du signal de sondage 42.

La station de base 20 réceptionne les rapports pendant un temps limité, défini par une temporisation démarrée à la réception du premier rapport provenant d'un des terminaux voisins 11, 12, 13 ou 14. Au terme de cette temporisation, la station de base 20 calcule la meilleure stratégie à mettre en place au vu des rapports obtenus. Cette meilleure stratégie permet la définition d'une consigne de configuration destinée aux terminaux voisins 11, 12, 13 et 14 et au terminal utilisateur 10 et définissant le ou les terminaux voisins à utiliser pour la transmission de données et le ou les protocoles de communication à utiliser.

La figure 8 représente l'étape d'émission de la consigne de configuration par la station de base 20, utilisant une diffusion de façon à transmettre la consigne de configuration dans la zone à portée de la station de base. L'émission de la consigne de configuration via diffusion est représentée en référence à la figure 8 par un ensemble d'ellipses 46 recouvrant la zone 22 à portée de la station de base 20. Cette consigne est ainsi reçue par tous les terminaux environnants, mais seuls les terminaux voisins 11, 12, 13 et 14 et le terminal utilisateur 10 en tiennent compte et l'appliquent.

La figure 9 représente un diagramme de séquence du deuxième mode de réalisation de l'étape de sélection des terminaux voisins et l'étape de configuration décrit dans les paragraphes précédents. La station de base 20 et les quatre terminaux 10 (le terminal utilisateur), 11, 12, et 17 parmi les terminaux environnants sont représentés et les communications entre ces terminaux sont symbolisées par des flèches ou des traits pointillés :
- les traits pointillés 48 représentent l'étape d'envoi du signal de sondage 42, décrite précédemment en référence à la figure 6,
- les flèches 50 et 51 représentent l'étape d'émission du rapport par chaque terminal voisin 11 et 12 en direction de la station de base 20, décrite précédemment en référence à la figure 7,
- les traits pointillés 52 représentent l'étape d'émission de la consigne de configuration par la station de base 20 via la diffusion de ladite consigne dans la zone 22 à portée de la station de base 20, décrite précédemment en référence à la figure 8,
- la flèche 54 représente la temporisation lancée par la station de base 20 à la réception du premier rapport provenant du terminal voisin 11 et dont le terme déclenche la définition de la consigne de configuration, puis son émission.

Dans un autre mode de réalisation, le terminal utilisateur 10 pourra envoyer un signal de requête de portée faible définie en fonction de ladite distance prédéterminée, de façon analogue à ce qui était décrit en référence à la figure 6. Ce signal de requête comprend les mêmes informations que le signal de sondage 42 décrit précédemment, en ajoutant une consigne de configuration comprenant des informations relatives à un réseau de courte portée auquel les terminaux voisins doivent se connecter pour la transmission des données avec le terminal utilisateur 10. Les terminaux voisins 11, 12, 13 et 14 qui reçoivent ce signal de contrôle se connectent alors directement au réseau signifié par le terminal utilisateur, sans effectuer l'étape d'émission de rapport par les terminaux voisins 11, 12, 13 et 14, ni l'étape d'émission de la consigne par la station de base 20 décrites précédemment en référence aux figures 7 et 8.

La suite de la description concerne différentes configurations que peuvent prendre les terminaux suite à l'étape de configuration par le biais de la consigne de configuration, afin d'effectuer l'étape de transmission de données entre le terminal utilisateur et la station de base, les données transitant par au moins un terminal voisin. Ces transmissions concernent le sens montant (*Uplink* en anglais), c'est-à-dire du terminal utilisateur vers le terminal voisin ou vers la station de base, et du terminal voisin vers la station de base, ainsi que le sens descendant (*Downlink* en anglais), c'est-à-dire de la station de base vers le terminal voisin ou vers le terminal utilisateur, et du terminal voisin vers le terminal utilisateur.

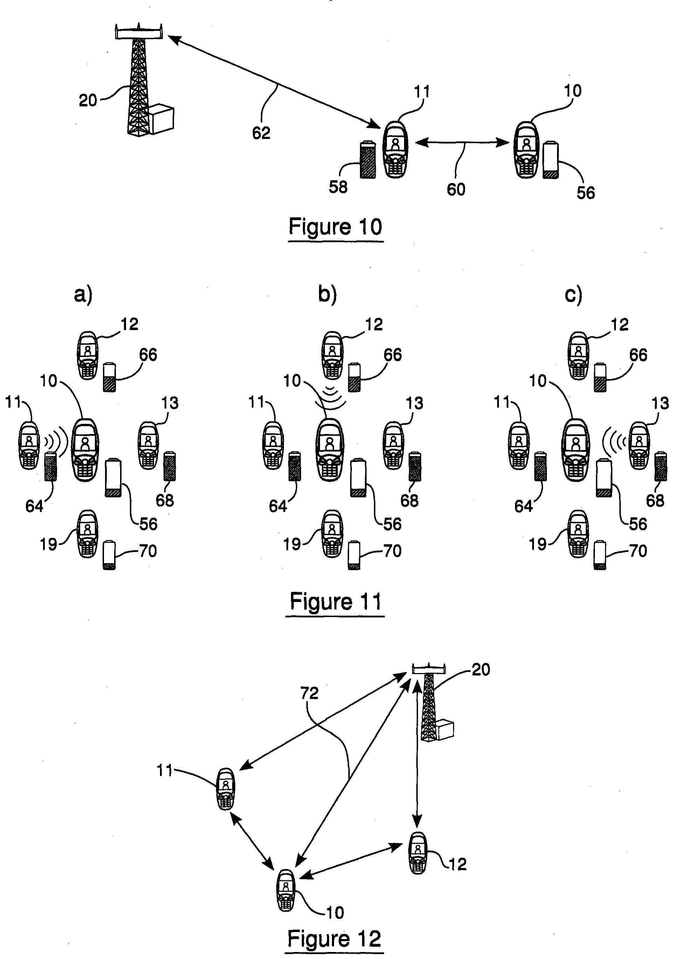

La figure 10 représente un premier mode de réalisation de l'étape de transmission de données entre le terminal utilisateur 10 et la station de base dans lequel la consigne de configuration a configuré les terminaux pour que les données transitent par un unique terminal voisin 11. Le terminal utilisateur 10 et l'unique terminal voisin 11 sont représentés avec leurs niveaux de batterie, en l'occurrence un niveau de batterie 56 faible pour le terminal utilisateur 10 et un niveau de batterie 58 élevé pour l'unique terminal voisin 11. Pour optimiser sa consommation d'énergie, le terminal utilisateur 10 est configuré pour une transmission 60 des données avec le terminal voisin 11, ce terminal voisin 11 étant lui-même configuré pour une transmission 62 des données avec la station de base 20.

La consommation d'énergie du terminal utilisateur 10 est généralement améliorée du fait de la distance réduite entre le terminal utilisateur 10 et le terminal voisin 11 (par rapport à la distance entre le terminal utilisateur 10 et la station de base 20), ou de l'utilisation d'un protocole de communication à plus faible consommation d'énergie lors de la transmission des données entre le terminal utilisateur et le terminal voisin que le protocole qui est généralement employé pour la transmission entre un terminal environnant et la station de base. En pratique, la transmission entre un terminal environnant et la station de base s'effectue par un protocole de communication de longue portée, par exemple le protocole LTE. Dans l'étape de transmission du procédé selon ce mode de réalisation, la transmission 62 entre le terminal voisin 11 et la station de base 20 s'effectue par le protocole de communication de longue portée, par exemple le protocole LTE, tandis que la transmission 60 entre le terminal voisin 11 et le terminal utilisateur 10 s'effectue par un protocole de communication à plus faible consommation d'énergie, typiquement un protocole de communication de courte portée tel que par exemple les protocoles WiFi, Bluetooth, mode de relayage par LTE, etc. Le mode de relayage par LTE fait partie des mécanismes intégrés dans le protocole LTE, et il permet au terminal voisin 11 de se comporter comme une station de base virtuelle pour le terminal utilisateur 10 qui peut donc transmettre les données en utilisant le protocole LTE mais sur une distance plus faible, les données étant ensuite transférées à la station de base 20. Cela permet l'utilisation d'un seul protocole pour la transmission de données.

La figure 11 représente schématiquement un terminal utilisateur 10, son niveau de batterie 56 et des terminaux voisins 11, 12 et 13 configurés par la consigne de configuration pour effectuer l'étape de transmission de données selon un autre mode de réalisation en utilisant plusieurs terminaux voisins 11, 12 et 13 par lesquels les données transitent. Ce mode de réalisation est notamment mis en oeuvre lorsque plusieurs terminaux voisins ont été sélectionnés lors de l'étape de sélection des terminaux voisins, et que tous présentent des caractéristiques satisfaisantes pour permettre d'assister le terminal utilisateur 10. Les terminaux voisins 11, 12 et 13 sont alors configurés par la consigne de configuration pour transmettre les données alternativement, pendant des intervalles de temps prédéfinis. Cela permet d'homogénéiser la consommation de batterie en répartissant la charge sur plusieurs terminaux voisins. Pour optimiser la consommation de batterie, les intervalles de temps prédéfinis sont avantageusement déterminés en tenant compte du niveau de batterie des terminaux voisins 11, 12 et 13, un terminal voisin ayant un niveau de batterie plus élevé transmettant les données pendant un intervalle de temps plus élevé qu'un terminal voisin possédant un niveau de batterie moins élevé. Les étapes a), b) et c) représentées sur la figure 11 représentent les transmissions de données respectivement effectuées par le terminal voisin 11 ayant un niveau de batterie 64 élevé, puis 12 ayant un niveau de batterie 66 intermédiaire et enfin 13 ayant un niveau de batterie 68 élevé. Un terminal 19 se trouve à proximité du terminal utilisateur 10 mais possède un niveau de batterie 70 trop faible pour être sélectionné comme terminal voisin. Les transmissions de données par le biais des terminaux analogues se font par exemple par le biais de protocoles de communications de longue portée et de courte portée de façon analogue à la description précédente en référence à la figure 10.

La figure 12 représente un autre mode de réalisation, où les terminaux voisins 11, 12 et le terminal utilisateur 10 sont configurés pour la transmission de données en utilisant un protocole de communication multi-chemin. La communication multi-chemin permet la transmission de données entre le terminal utilisateur 10 et la station de base 20 par plusieurs chemins différents, c'est-à-dire dans notre procédé par plusieurs terminaux voisins 11, 12 différents ou par transmission directe 72 avec la station de base 20. Contrairement au mode de réalisation décrit en référence à la figure 11, ces transmissions par plusieurs terminaux voisins peuvent se faire simultanément et non pas alternativement.

Le protocole multi-chemin peut être utilisé pour diverses raisons : ajouter de la redondance lors de la transmission de données, de façon à éviter les erreurs de transmission et les renvois de données qui peuvent consommer de l'énergie, soit découper les données en échantillons ou paquets et transmettre ces échantillons par plusieurs chemins différents pour optimiser la transmission de données, notamment au niveau du débit ou de la qualité.

Les terminaux voisins 11 et 12 et le terminal utilisateur 10 peuvent traiter les données de différentes manières, selon différentes configurations utilisées.

Pour la transmission dans le sens du terminal utilisateur 10 vers la station de base 20, les terminaux voisins 11 et 12 peuvent :
- recevoir les données du terminal utilisateur 10 sous la forme d'une série de bits utiles, et les coder, les moduler puis les transmettre vers la station de base 20,
- recevoir les données du terminal utilisateur 10 sous la forme d'une série de bits codés, et les moduler puis les transmettre vers la station de base 20,
- recevoir les données du terminal utilisateur 10 sous la forme d'une série de bits codés et modulés, et les transmettre vers la station de base 20.

De la même façon, pour la transmission dans le sens de la station de base 20 vers le terminal utilisateur 10, les terminaux voisins 11 et 12 peuvent :
- recevoir les données de la station de base 20, les démoduler, les décoder et les transmettre au terminal utilisateur 10 accompagnées d'informations sur la qualité de la transmission ainsi que la valeur d'un contrôle de redondance cyclique des données codées reçues, afin de permettre au terminal utilisateur 10 de sélectionner parmi les différentes données redondantes celle qui est de meilleure qualité et avec le moins d'erreurs possible,
- recevoir les données de la station de base 20, les démoduler et les transmettre au terminal utilisateur 10 accompagnées d'informations sur la qualité de la transmission afin de permettre au terminal utilisateur 10 de combiner les données reçues par différents chemins en prenant en compte leur qualité,
- recevoir les données de la station de base 20 et les transmettre au terminal utilisateur 10, les terminaux voisins 11 et 12 se comportant alors comme des relais additionnels.

L'invention ne se limite pas aux seuls modes de réalisation décrits. En particulier, les différents modes de réalisations présentés pour chaque étape du procédé peuvent faire l'objet de toutes les combinaisons possibles entrant dans le cadre de l'invention.

## Revendications

1. Procédé de communication entre un terminal utilisateur (10) alimenté par une batterie et une station de base (20) par le biais d'autres terminaux situés à proximité du terminal utilisateur, permettant une optimisation de la gestion de la batterie dudit terminal utilisateur (10), **caractérisé en ce qu'**il comprend :
- une étape de sélection parmi des terminaux, dits terminaux environnants (11, 12, 13, 14, 15, 16, 17, 18, 19), alimentés par batterie et situés dans une zone (22) à portée de la station de base (20), de terminaux dont la distance avec ledit terminal utilisateur (10) est inférieure à une distance prédéterminée et dont le niveau de batterie est supérieur à un seuil prédéterminé, dits terminaux voisins (11, 12, 13, 14),
- une étape de configuration des terminaux voisins (11, 12, 13, 14) et du terminal utilisateur (10) par le biais d'une consigne de configuration,
- une étape de transmission de données entre le terminal utilisateur (10) et la station de base (20) suivant ladite consigne de configuration définissant au moins un terminal voisin (11, 12, 13, 14) par lequel lesdites données transitent,
- ladite consigne de configuration définit un protocole de communication de courte portée et un protocole de communication de longue portée,
et **en ce que** l'étape de transmission de données comprend :
- une sous-étape de transmission des données entre le terminal utilisateur (10) et un ou plusieurs terminaux voisins (11, 12, 13, 14) par le protocole de communication de courte portée,
- une sous-étape de transmission des données entre le ou les terminaux voisins (11, 12, 13, 14) et la station de base (20) par le protocole de communication de longue portée.

2. Procédé selon la revendication précédente, **caractérisé en ce que** ladite consigne de configuration définit au moins un protocole de communication à utiliser pour l'étape de transmission de données.

3. Procédé selon l'une des revendications précédentes, **caractérisé en ce que** ladite étape de sélection des terminaux voisins (11, 12, 13, 24) comprend :
- une étape de signalement effectuée par le terminal utilisateur (10) en direction des terminaux environnants (11, 12, 13, 14, 15, 16, 17, 18, 19),
- une étape de calcul de la distance entre chaque terminal environnant et le terminal utilisateur (10),
et **en ce que** l'étape de configuration comprend :
- une étape d'émission d'un rapport effectuée par chaque terminal voisin (11, 12, 13, 14) en direction de la station de base (20), ledit rapport comprenant au moins le niveau de batterie du terminal voisin et sa position,
- une étape de détermination de ladite consigne de configuration par la station de base (20),
- une étape d'émission de ladite consigne de configuration par la station de base (20) en direction des terminaux voisins (11, 12, 13, 14) et du terminal utilisateur (10).

4. Procédé selon la revendication précédente, **caractérisé en ce que** :
- l'étape de signalement du terminal utilisateur (10) aux terminaux environnants (11, 12, 13, 14, 15, 16, 17, 18, 19) comprend une sous-étape d'envoi d'un signal d'aide par le terminal utilisateur (10) en direction de la station de base (20), puis une sous-étape d'envoi d'un signal de contrôle de ressource par la station de base (20) via une diffusion dudit signal dans la zone à portée de la station de base (20),
- l'étape d'émission de ladite consigne de configuration par la station de base (20) s'effectue uniquement en direction des terminaux voisins (11, 12, 13, 14) et du terminal utilisateur (10).

5. Procédé selon la revendication 3, **caractérisé en ce que** :
- l'étape de signalement par le terminal utilisateur (10) en direction des terminaux environnants (11, 12, 13, 14, 15, 16, 17, 18, 19) comprend une étape d'envoi par le terminal utilisateur (10) d'un signal de sondage (42) de portée faible définie en fonction de ladite distance prédéterminée,
- l'étape d'émission de la consigne de configuration par la station de base (20) s'effectue via une diffusion de ladite consigne dans la zone (22) à portée de la station de base (20).

6. Procédé selon l'une des revendications 1 ou 2, **caractérisé en ce que** l'étape de sélection des terminaux voisins (11, 12, 13, 14) comprend une étape d'envoi par le terminal utilisateur (10) d'un signal de requête de portée faible définie en fonction de ladite distance prédéterminée, ledit signal de requête comprenant ladite consigne de configuration définissant des informations relatives à un réseau de courte portée auquel les terminaux voisins (11, 12, 13, 14) doivent se connecter pour la transmission des données avec le terminal utilisateur (10).

7. Procédé selon l'une des revendications 1 ou 2, **caractérisé en ce que** :
- l'étape de sélection des terminaux voisins comprend une sous-étape d'envoi par le terminal utilisateur (10) d'un signal de connexion comprenant ladite consigne de configuration définissant des informations relatives à un réseau de courte portée auquel les terminaux voisins (11, 12, 13, 14) doivent se connecter pour la transmission des données avec le terminal utilisateur (10), en direction de la station de base (20), une sous-étape de diffusion dudit signal de connexion dans la zone à portée de la station de base, et une sous-étape de calcul de la distance entre chaque terminal environnant et le terminal utilisateur (10),
- l'étape de configuration comprend une étape de connexion des terminaux voisins (11, 12, 13, 14) audit réseau de courte portée.

8. Procédé selon l'une des revendications précédentes, **caractérisé en ce que** ladite consigne de configuration configure les terminaux de sorte que, lors de l'étape de transmission de données, lesdites données transitent par un unique terminal voisin à la fois.

9. Procédé selon la revendication précédente, **caractérisé en ce que** ladite consigne de configuration configure les terminaux de sorte que, lors de l'étape de transmission de données, les données transitent alternativement par chaque terminal voisin pendant un intervalle de temps corrélé avec le niveau de batterie de chaque terminal voisin.

10. Procédé selon l'une des revendications 1 à 7, **caractérisé en ce que** ladite consigne de configuration configure les terminaux de sorte que, lors de l'étape de transmission de données, lesdites données transitent simultanément par plusieurs terminaux voisins et directement entre le terminal utilisateur (10) et la station de base (20) en utilisant un protocole de communication multi-chemin.

11. Réseau de communication, comprenant une station de base (20) et un ensemble de terminaux (10, 11, 12, 13, 14, 15, 16, 17, 18, 19) alimentés par batterie et situés à portée de la station de base **caractérisé en ce qu'**au moins un des terminaux met en oeuvre le procédé selon l'une des revendications précédentes.

## Patentansprüche

1. Kommunikationsverfahren zwischen einem von einer Batterie versorgten Nutzerterminal (10) und einer Basisstation (20) anhand von anderen, sich in der Nähe des Nutzerterminals befindenden Terminals, welche eine Optimierung der Verwaltung der Batterie des genannten Nutzerterminals (10) zulässt, **dadurch gekennzeichnet, dass** es umfasst:
- Einen Auswahlschritt aus den Terminals, bezeichnet als umgebende Terminals (11, 12, 13, 14, 15, 16, 17, 18, 19), die per Batterie versorgt werden und sich in einem Bereich (22) in der Reichweite der Basisstation (20) befinden, von Terminals, deren Entfernung zu dem genannten Nutzerterminal (10) geringer ist als eine vorbestimmte Entfernung und dessen Batteriestand höher ist als ein vorbestimmter Schwellenwert, bezeichnet als benachbarte Terminals (11, 12, 13, 14);
- einen Konfigurationsschritt der benachbarten Terminals (11, 12, 13, 14) und des Nutzerterminals (10) anhand eines Konfigurations-Sollwertes;
- einen Datenübertragungsschritt zwischen dem Nutzerterminal (10) und der Basisstation (20) gemäß dem genannten Konfigurationssollwert, der wenigstens ein benachbartes Terminal (11, 12, 13, 14) definiert, durch das die genannten Daten hindurchtreten;
- der genannte Konfigurationssollwert definiert ein Kommunikationsprotokoll von kurzer Reichweite und ein Kommunikationsprotokoll von langer Reichweite.
und dass der Datenübertragungsschritt umfasst:
- einen Übertragungsteilschritt der Daten zwischen dem Nutzerterminal (10) und einem oder mehreren benachbarten Terminals (11, 12, 13, 14) durch das Kommunikationsprotoll von kurzer Reichweite,
- einen Übertragungsteilschritt der Daten zwischen dem oder den benachbarten Terminals (11, 12, 13, 14) und der Basisstation (20) durch das Kommunikationsprotokoll mit langer Reichweite.

2. Verfahren gemäß dem voranstehenden Anspruch, **dadurch gekennzeichnet, dass** der genannte Konfigurationssollwert wenigstens ein Kommunikationsprotokoll definiert, das für den Datenübertragungsschritt konfiguriert ist.

3. Verfahren gemäß einem der voranstehenden Ansprüche, **dadurch gekennzeichnet, dass** der genannte Auswahlschritt der benachbarten Terminals (11, 12, 13, 14) umfasst:
- einen Meldeschritt, der vom Nutzerterminal (10) in Richtung der benachbarten Terminals (11, 12, 13, 14, 15, 16, 17, 18, 19) ausgeführt wird,
- einen Berechnungsschritt der Entfernung zwischen jedem umgebenden Terminal und dem Nutzerterminal (10),
und dass der Konfigurationsschritt umfasst:
- einen Ausgabeschritt eines Berichts, der durch jedes benachbarte Terminal (11, 12, 13, 14) in Richtung der Basisstation (20) ausgeführt wird, wobei der genannte Bericht wenigstens den Batteriestand des benachbarten Terminals und seine Position umfasst,
- einen Bestimmungsschritt des genannten Konfigurationssollwertes durch die Basisstation (20),
- einen Ausgabeschritt der genannten Konfigurationssollwertes durch die Basisstation (20) in Richtung der benachbarten Terminals (11, 12, 13, 14) und des Nutzerterminals (10).

4. Verfahren gemäß dem voranstehenden Anspruch, **dadurch gekennzeichnet, dass**:
- der Meldeschritt des Nutzerterminals (10) an die umgebenden Terminals (11, 12, 13, 14, 15, 16, 17, 18, 19) einen Versandteilschritt eines Hilfssignals durch das Nutzerterminal (10) in Richtung der Basisstation (20) umfasst, dann einen Versandteilschritt eines Ressourcenkontrollsignals durch die Basisstation (20) über ein Versenden des genannten Signals in dem Bereich in der Reichweite der Basisstation (20),
- der Ausgabeschritt des genannten Konfigurationssollwertes durch die Basisstation (20) erfolgt ausschließlich in Richtung der benachbarten Terminals (11, 12, 13, 14) und des Nutzerterminals (10).

5. Verfahren gemäß Anspruch 3, **dadurch gekennzeichnet, dass**:
- der Meldeschritt durch das Nutzerterminal (10) in Richtung der umgebenden Terminals (11, 12, 13, 14, 15, 16, 17, 18, 19) einen Versandschritt eines Sondierungssignals (42) mit geringer Reichweite, die in Abhängigkeit von der genannten vorbestimmten Entfernung definiert ist, durch das Nutzerterminal (10) umfasst,
- der Ausgabeschritt des Konfigurationssollwertes durch die Basisstation (20) über eine Ausgabe des genannten Sollwertes in dem Bereich (22) in der Reichweite der Basisstation (20) erfolgt.

6. Verfahren gemäß einem der Ansprüche 1 oder 2, **dadurch gekennzeichnet, dass** der Auswahlschritt der benachbarten Terminals (11, 12, 13, 14) einen Versandschritt eines Anfragesignals mit geringer Reichweite, die in Abhängigkeit von der genannten vorbestimmten Entfernung definiert ist, durch das Nutzerterminal (10) umfasst, wobei das genannte Anfragesignal den genannten Konfigurationssollwert umfasst, der die Informationen bezüglich eines Netzes mit kurzer Reichweite definiert, an das die benachbarten Terminals (11, 12, 13, 14) sich für die Übertragung der Daten mit dem Nutzerterminal (10) anschließen müssen.

7. Verfahren gemäß einem der Ansprüche 1 oder 2, **dadurch gekennzeichnet, dass**:
- der Auswahlschritt der benachbarten Terminals einen Versandteilschritt eines Anschlusssignals, das den genannten Konfigurationssollwert umfasst, der die Informationen bezüglich eines Netzes mit kurzer Reichweite definiert, an das die benachbarten Terminals (11, 12, 13, 14) sich für die Übertragung der Daten mit dem Nutzerterminal (10) anschließen müssen, durch das Nutzerterminal (10) in Richtung der Basisstation (20), einen Versandteilschritt des genannten Anschlusssignals in dem Bereich in der Reichweite der Basisstation und einen Berechnungsteilschritt der Entfernung zwischen jedem umgebenden Terminal und dem Nutzerterminal (10) umfasst,
- der Konfigurationsschritt einen Anschlussschritt der benachbarten Terminals (11, 12, 13, 14) an das genannte Netz mit kurzer Tragweite umfasst.

8. Verfahren gemäß einem der voranstehenden Ansprüche **dadurch gekennzeichnet, dass** der genannte Konfigurationssollwert die Terminals derart konfiguriert, dass bei dem Datenübertragungsschritt die genannten Daten durch ein einziges benachbartes Terminal gleichzeitig hindurchtreten.

9. Verfahren gemäß dem voranstehenden Anspruch, **dadurch gekennzeichnet, dass** der genannte Konfigurationssollwert die Terminals derart konfiguriert, dass die Daten, bei dem Datenübertragungsschritt während eines mit dem Batteriestand jedes benachbarten Terminals korrelierten Zeitintervalls alternativ durch jedes benachbarte Terminal hindurchtreten.

10. verfahren gemäß einem der Ansprüche 1 bis 7, **dadurch gekennzeichnet, dass** der genannte Konfigurationssollwert die Terminals derart konfiguriert, dass die genannten Daten bei dem Datenübertragungsschritt gleichzeitig durch mehrere benachbarte Terminals und direkt zwischen dem Nutzerterminal (10) und der Basisstation (20) unter Nutzung eines mehrpfadigen Kommunikationsprotokolls hindurchtreten.

11. Kommunikationsverfahren, umfassend eine Basisstation (20) und eine Gruppe von Terminals (10, 11, 12, 13, 14, 15, 16, 17, 18, 19), die durch Batterien versorgt werden und sich in Reichweite der Basisstation befinden, **dadurch gekennzeichnet, dass** wenigstens eines der Terminals das Verfahren gemäß einem der voranstehenden Ansprüche umsetzt.

## Claims

1. A method for communicating between a user terminal (10) powered by a battery and a base station (20) by means of other terminals located near the user terminal, enabling the battery management of said user terminal (10) to be optimised, **characterised in that** it comprises:
- a step of selecting from terminals, said to be surrounding terminals (11, 12, 13, 14, 15, 16, 17, 18, 19), powered by battery and located in an area (22) within the range of the base station (20), terminals the distance of which from said user terminal (10) is lower than a predetermined distance and the battery level of which is greater than a predetermined threshold, said to be neighbouring terminals (11, 12, 13, 14),
- a step of configuring the neighbouring terminals (11, 12, 13, 14) and the user terminal (10) by means of a configuration set point,
- a step of transmitting data between the user terminal (10) and the base station (20) according to said configuration set point defining at least one neighbouring terminal (11, 12, 13, 14) through which said data passes,
- said configuration set point defines a short range communication protocol and a long range communication protocol,
and **in that** the step of transmitting data comprises:
- a sub-step of transmitting the data between the user terminal (10) and one or more neighbouring terminals (11, 12, 13, 14) by the short range communication protocol,
- a sub-step of transmitting the data between the neighbouring terminal(s) (11, 12, 13, 14) and the base station (20) by the long range communication protocol.s

2. The method according to the previous claim, **characterised in that** said configuration set point defines at least one communication protocol to be used for the step of transmitting data.

3. The method according to one of the previous claims, **characterised in that** said step of selecting the neighbouring terminals (11, 12, 13, 14) comprises:
- a step of signalling performed by the user terminal (10) towards the surrounding terminals (11, 12, 13, 14, 15, 16, 17, 18, 19),
- a step of calculating the distance between each surrounding terminal and the user terminal (10),
and **in that** the step of configuring comprises:
- a step of emitting a report performed by each neighbouring terminal (11, 12, 13, 14) towards the base station (20), said report comprising at least the battery level of the neighbouring terminal and its position,
- a step of determining said configuration set point by the base station (20),
- a step of emitting said configuration set point by the base station (20) towards the neighbouring terminals (11, 12, 13, 14) and the user terminal (10).

4. The method according to the previous claim, **characterised in that**:
- the step of signalling of the user terminal (10) to the surrounding terminals (11, 12, 13, 14, 15, 16, 17, 18, 19) comprises a sub-step of sending an aid signal by the user terminal (10) towards the base station (20), and then a sub-step of sending a resource control signal by the base station (20) by broadcasting said signal in the area within the range of the base station (20),
- the step of emitting said configuration set point by the base station (20) is only performed towards the neighbouring terminals (11, 12, 13, 14) and the user terminal (10).

5. The method according to claim 3, **characterised in that**:
- the step of signalling by the user terminal (10) towards the surrounding terminals (11, 12, 13, 14, 15, 16, 17, 18, 19) comprises
a step of sending by the user terminal (10) a short range sounding signal (42) defined as a function of said predetermined distance,
- a step of emitting the configuration set point by the base station (20) is performed by broadcasting said set point in the area (22) within the range of the base station (20).

6. The method according to one of claims 1 or 2, **characterised in that** the step of selecting the neighbouring terminals (11, 12, 13, 14) comprises a step of sending by the user terminal (10) a short range request signal defined as a function of said predetermined distance, said request signal comprising said configuration set point defining information relative to a short range network to which the neighbouring terminals (11, 12, 13, 14) must connect to transmit the data with the user terminal (10).

7. The method according to one of claims 1 or 2, **characterised in that**:
- the step of selecting the neighbouring terminals comprises a sub-step of sending by the user terminal (10) a connection signal comprising said configuration set point defining information relative to a short range network to which the neighbouring terminals (11, 12, 13, 14) must connect to transmit the data with the user terminal (10), towards the base station (20), a sub-step of broadcasting said connection signal in the area within the range of the base station, and a sub-step of calculating the distance between each surrounding terminal and the user terminal (10),
- the configuration step comprises a step of connecting the neighbouring terminals (11, 12, 13, 14) to said short range network.

8. The method according to one of the previous claims, **characterised in that** said configuration set point configures the terminals so that, during the step of transmitting data, said data passes through a single neighbouring terminal at a time.

9. The method according to the previous claim, **characterised in that** said configuration set point configures the terminals so that, during the step of transmitting data, the data alternatively passes through each neighbouring terminal during a time interval correlated with the battery level of each neighbouring terminal.

10. The method according to one of claims 1 to 7, **characterised in that** said configuration set point configures the terminals so that, during the step of transmitting data, said data simultaneously passes through several neighbouring terminals and directly between the user terminal (10) and the base station (20) by using a multi-path communication protocol.

11. A communication network, comprising a base station (20) and a set of terminals (10, 11, 12, 13, 14, 15, 16, 17, 18, 19) powered by battery and located within the range of the base station, **characterised in that** at least one of the terminals implements the method according to one of the previous claims.
